# EUROPÄISCHE PATENTSCHRIFT

(11) **EP 2 556 757 B1**
(45) Veröffentlichungstag und Bekanntmachung des Hinweises auf die Patenterteilung: **30.07.2014**
(21) Anmeldenummer: 11006547.1
(22) Anmeldetag: 09.08.2011
(51) Int. Cl.: A23L 3/00, A23L 3/015, A23L 3/12, A61L 2/02, A61L 2/26, B65D 81/20

(54) **Behälter zur Aufnahme von Produkten während einer Hochdruckbehandlung**
Container for holding products during high pressure treatment
Récipient destiné à la réception de produits durant un traitement à pression élevée

(43) Veröffentlichungstag der Anmeldung: 13.02.2013
(73) Patentinhaber: Multivac Sepp Haggenmüller GmbH & Co. KG, 87787 Wolfertschwenden (DE)
(72) Erfinder: Richter, Tobias, 87700 Memmingen (DE)
(74) Vertreter: Grünecker, Kinkeldey, Stockmair & Schwanhäusser

(56) Entgegenhaltungen:
- EP-A1- 1 051 981
- EP-A1- 1 563 853
- EP-A2- 1 862 082
- EP-A2- 2 308 759
- WO-A1-01/65946
- WO-A1-92/07478
- DE-A1- 2 026 961
- DE-B1- 1 492 367
- FR-A- 895 580
- US-A1- 2006 257 552

## Beschreibung

Die vorliegende Erfindung bezieht sich auf einen Behälter zur Aufnahme von Produkten während einer Hochdruckbehandlung dieser Produkte. Der Behälter kann die Produkte z.B. während des Transports zu einer Kammer aufnehmen, in der die Produkte hochdruckbehandelt werden, sowie während des Transports aus dieser Kammer heraus. Bei den Produkten kann es sich um verpackte Lebensmittel handeln.

Lebensmittel sind chemischen und biologischen Prozessen unterworfen, die ihre Zusammensetzung verändern und auch gesundheitsschädliche Substanzen erzeugen können. Beispielsweise können die Lebensmittel oxidieren, oder sie können durch Enzyme und Mikroorganismen, beispielsweise Schimmelpilze, verändert werden. Damit Lebensmittel für den Verbraucher sicher zu verzehren, transportierbar und möglichst lange haltbar sind, müssen diese Prozesse verhindert oder zumindest innerhalb der gewünschten Haltbarkeit verzögert werden.

Eine Möglichkeit besteht darin, Lebensmittel stark zu zuckern, zu salzen oder zu trocknen, um dem Lebensmittel Wasser zu entziehen und so die Entwicklung von Mikroorganismen wie Schimmelpilzen oder Bakterien zu behindern. Auch die Zugabe von Alkohol oder Essig, der Zusatz von Konservierungsmitteln sowie das Kühlen bremsen die Entwicklung von Mikroorganismen und setzen die Aktivität von Enzymen herab. Ferner kann eine Hitzebehandlung dafür sorgen, dass Mikroorganismen abgetötet und schädliche Enzyme inaktiviert werden. Bei der Pasteurisation wird das Lebensmittel dabei für eine gewisse Zeit auf etwa 100 °C erwärmt. Allerdings bleiben dabei die vergleichsweise resistenten Bakteriensporen weiterhin keimfähig, und es besteht die Gefahr, dass durch die Hitzebehandlung auch wichtige Nährstoffe und Aromen zerstört werden.

Eine weitere Methode zur Verlängerung der Haltbarkeit von Lebensmitteln besteht darin, die Lebensmittel in eine gasdichte Verpackung einzufüllen und die Verpackung vor dem Verschließen zu evakuieren. Gegebenenfalls kann der Verpackung noch ein Schutzgas oder -mischungen beigegeben werden, beispielsweise mit Stickstoff oder CO₂. Durch die Verdrängung der Luft, beispielsweise des Sauerstoffs, wird ebenfalls die Aktivität von Enzymen oder Mikroorganismen verlangsamt.

Ein zumindest in industriellem Maßstab bisher kaum genutztes Verfahren ist die Hochdruckbehandlung von Lebensmitteln. Bei diesem Verfahren wird ein üblicherweise bereits verpacktes Lebensmittel über eine gewisse Zeitspanne, beispielsweise einige Minuten, sehr hohen Drücken von typischerweise 400 MPa bis 600 MPa unterworfen. Diese hohen Drücke sorgen dafür, dass schädliche Mikroorganismen im Lebensmittel zerstört und abgetötet werden. Kleinere Moleküle hingegen, wie Vitamine, die Geschmack und Nährwert des Lebensmittels bestimmen, werden durch die Hochdruckbehandlung kaum beeinflusst. Bei Fleischprodukten kann die Haltbarkeit so beispielsweise um den Faktor 6 bis 10 im Vergleich zum unbehandelten Produkt verlängert werden.

Gegenüber der Hitzebehandlung hat die Hochdruckbehandlung verschiedene Vorteile. Beispielsweise wird der Geschmack kaum verändert, und der Vitamingehalt im Lebensmittel ist nach einer Hochdruckbehandlung teilweise mehr als doppelt so hoch wie nach einer Hitzebehandlung. Einige hitzeempfindliche Produkte, beispielsweise Meeresfrüchte, lassen zudem überhaupt keine Hitzebehandlung zu. Pathogene Keime, wie Listerien, können sicher abgetötet werden, sodass die Lebensmittelsicherheit erhöht wird. Durch die Hochdruckbehandlung lässt sich die interne Struktur der Lebensmittel aber auch gezielt beeinflussen, sodass sich neuartige Produktmöglichkeiten, beispielsweise durch das Gelieren von Fruchtzubereitungen ohne Hitze, ergeben. Schließlich ist die Technologie zur Hochdruckbehandlung bereits in vielen Ländern als (Lebensmittel-) sicher anerkannt.

Bei der Hochdruckbehandlung von verpackten Lebensmitteln kann es durch die Prozessbedingungen zu Problemen mit der Verpackung kommen. So können optisch nachteilige Veränderungen und auch Schäden auftreten. Speziell Verpackungen mit Schutzgasatmosphäre bereiten durch den stark komprimierbaren Gasanteil in der Packung Probleme. Dies ist auch ein Grund dafür, dass bislang vorwiegend Vakuumverpackungen bei der Hochdruckbehandlung eingesetzt werden.

Die Inaktivierung von Mikroorganismen sowie die Strukturmodifikation von Lebensmittelbestandteilen werden beispielsweise beschrieben in der EP 0 588 010 A1, der EP 0 689 391 B1, der EP 0 752 211 B1, der EP 1 100 340 B1, der DE 42 26 255 A1, oder der DE 37 34 025 C2. Die EP 1 112 008 B1, EP 1 201 252 B1, DE 196 49 952 A1. DE 197 38 800 A1, DE 199 39 677 A1 und die DE 26 11 389 A1 beschreiben die Auswirkungen der Hochdruckbehandlungen auf die mikrobiologische Haltbarkeit und die Sicherheit von Lebensmitteln. Die Anwendung der Hochdruckbehandlung speziell auf Fleischerzeugnisse wird beschrieben in der DE 198 01 031 C2, DE 196 53 677 C1, EP 0 748 592 B1, EP 0 683 986 B1, DE 101 01 958 A1, DE 10 2005 011 868 A1, oder der WO 2006/097248 A1.

Eine Anlage zur Hochdruckbehandlung von Lebensmitteln ist darüber hinaus aus der WO 2006/129180 A1 bekannt. Dabei ist ein Autoklav mit einer Hochdruckkammer vorgesehen, in der die Lebensmittel einem Hochdruck ausgesetzt werden. Zum Aufbauen des Drucks muss der Autoklav verschlossen werden. Folglich kann die Anlage nicht kontinuierlich betrieben werden. Um den Durchsatz der Anlage zu erhöhen, wird sie typischerweise in einem Batch-Verfahren betrieben, bei dem die Produkte gruppenweise in den Autoklaven eingebracht, hochdruckbehandelt und entnommen werden.

Um den Autoklaven schneller be- und entladen zu können und so die Taktzeit zu verkürzen, werden die zu behandelnden Produkte üblicherweise in einen Behälter eingefüllt. Sobald die Hochdruckkammer frei ist, können ein oder ggf. mehrere Behälter in die Hochdruckkammer hinein gefahren werden, beispielsweise indem die Behälter mittels eines Schiebers bewegt werden. Im Anschluss an die Hochdruckbehandlung werden die Behälter wieder aus dem Autoklaven entnommen, beispielsweise indem sie auf der der Einführöffnung gegenüber liegenden Seite wieder herausgeschoben werden.

Ein Transportbehälter zur Aufnahme von Produkten während einer Hochdruckbehandlung, der hinsichtlich seiner Befüllung limitiert ist, geht aus der DE 199 52 611 A1 hervor. Ein gattungsgemäßer Behälter für die gleichen Zwecke wie der Behälter der vorliegenden Erfindung geht darüber hinaus aus der DE 10 2009 042 094 A1 bzw. aus der dazu parallelen EP 2 322 044 A1 hervor, sowie aus der US 2006/0257552 hervor.

Aus der DE 2026961 gehen Druckbehälter hervor die beispielsweise in zwei Hälften geteilt und zu endlosen Ketten gefügt werden.

Behälter, die zur Aufnahme von Produkten während einer Temperatursterilisierung geeignet sind, aber einer Hochdruckbehandlung nicht standhalten würden, sind beispielsweise aus der EP 0 165 152 A1, der WO 95/24932 A1 oder der FR 2 542 200 A1 bekannt. Weitere Behälter zu gänzlich anderen Zwecken, die ebenfalls einer Hochdruckbehandlung nicht standhalten würden, sind beispielsweise aus der DE 70 23 578, der AT 365 150, der DE 822 193, der DE 72 07 545 oder der DE 91 09 207 U1 bekannt.

Aufgabe der Erfindung ist es, einen Behälter zur Aufnahme von Produkten während einer Hochdruckbehandlung zur Verfügung zu stellen, der mit konstruktiven möglichst einfachen Mitteln hinsichtlich seiner Langlebigkeit und einer möglichst effizienten Hochdruckbehandlung der von ihm erfassten Produkte verbessert ist.

Diese Aufgabe wird gelöst durch einen Behälter mit den Merkmalen des Anspruchs 1. Vorteilhafte Weiterbildung der Erfindung sind in den Unteransprüchen angegeben.

Der erfindungsgemäße Behälter, der wegen seiner Eigenschaft zum Transportieren der von ihm aufgenommenen Produkte auch als Transportbehälter bezeichnet werden kann, zeichnet sich dadurch aus, dass wenigstens ein Abschnitt seiner Außenwand durch eine Vielzahl von miteinander verbundenen oder gekoppelten Kettengliedern gebildet ist, die in Form eines mehrdimensionalen Kettengliedfeldes angeordnet sind. Dabei bedeutet der Ausdruck "mehrdimensionales Kettengliedfeld", dass die Kettenglieder in mehreren unterschiedlichen Raumrichtungen benachbart zueinander angeordnet sind. Insbesondere ist es denkbar, dass sowohl in einer Längsrichtung bzw. Axialrichtung des Behälters, als auch in einer Umfangsrichtung des Behälters jeweils mehrere miteinander gekoppelte Kettenglieder neben- bzw. hintereinander angeordnet sind. Dabei ist es durchaus möglich, dass mehrere benachbarte Kettenglieder beispielsweise in Axialrichtung des Behälters vergleichsweise starr miteinander gekoppelt sind, während benachbarte Kettenglieder oder Gruppen von Kettengliedern in Umfangsrichtung des Behälters gelenkig miteinander gekoppelt sind.

Insgesamt bietet der erfindungsgemäße Behälter für die Aufnahme von Produkten während einer Hochdruckbehandlung mehrere Vorteile. So ist es möglich, dass durch Öffnungen in den einzelnen Kettengliedern und/oder zwischen benachbarten Kettengliedern ein Hochdruckmedium, üblicherweise Wasser, in den Behälter hinein oder nach der Hochdruckbehandlung wieder aus dem Behälter hinaus fließen kann. Wegen der Vielzahl von zur Verfügung stehenden Öffnungen kann dieses Ein- und Ausfließen des Hochdruckmediums vergleichsweise schnell geschehen, was die Hochdruckbehandlungszeit verkürzt. Zudem ermöglicht die Verwendung eines mehrdimensionalen Kettengliedfeldes eine gewisse Nachgiebigkeit der Form der Außenwand des Behälters. Diese Nachgiebigkeit in bestimmten Grenzen lässt den Behälter auf lokale Druckunterschiede reagieren und verhindert so einen frühzeitigen Ermüdungsbruch. Auf diese Weise erhält der Behälter eine sehr lange Lebensdauer.

Das Be- und Entladen des Behälters wird erleichtert, wenn der Behälter einen ersten Behälterteil und einen zweiten Behälterteil aufweist, die um ein Scharnier relativ zueinander auf- und zuschwenkbar sind. Insbesondere könnte jeder der beiden Behälterteile in der in der DE 10 2009 042 094 A1 beschriebenen Weise eine halbzylindrische Form aufweisen, sodass sich die beiden Behälterteile insgesamt zu einem zylindrischen Behälter zusammensetzen. Auch andere Aufteilungen der Behälterform auf mehrere Behälterteile sind denkbar, wobei jedoch eine insgesamt zylindrische Form des gesamten Behälters bevorzugt ist.

Zweckmäßig ist es ferner, wenn wenigstens an einem der Behälterteile ein Niederhalter vorgesehen ist. Dieser dient dazu, die in dem jeweiligen Behälterteil aufgenommenen Produkte zu sichern und an einem Herausfallen zu hindern, wenn die beiden Behälterteile zu einem geschlossenen Behälter zusammengesetzt werden.

Bei dem mehrdimensionalen Kettengliedfeld des erfindungsgemäßen Behälters ist es insbesondere möglich, dass sich die Kettenglieder quer zu einer Richtung einer vom Scharnier definierten Scharnier- oder Schwenkachse erstrecken, d.h. üblicherweise in Umfangsrichtung des Behälters. Dies führt zu einer vorteilhaften, leichten Variabilität der Umfangsform des Behälters, wenn sich benachbarte Kettenglieder oder Gruppen von Kettengliedern gegeneinander bewegen.

In einer vorteilhaften Variante der Erfindung erstreckt sich eine Gruppe von miteinander gekoppelten Kettengliedern von einem Behälterteil bis zum anderen Behälterteil. Damit erhalten die Kettenglieder eine Doppelfunktion: Sie bilden nicht nur wenigstens abschnittsweise die Außenwand des Behälters, sondern sie dienen gleichzeitig auch der Befestigung der beiden Behälterteile aneinander.

Besonders vorteilhaft ist es, wenn diese Befestigung der beiden Behälterteile aneinander dadurch entsteht, dass durch ein oder mehrere Kettenglieder das Scharnier gebildet ist, um das der erste Behälterteil relativ zum zweiten Behälterteil auf- und zuschwenkbar ist.

Weitere Vorteile entstehen, wenn auf mindestens einem der das Scharnier bildenden Kettenglieder ein Halteschwert vorgesehen ist. Dieses kann erfolgreich ein ungewolltes Öffnen eines an dem Behälterteil vorgesehenen Niederhalters verhindern, sobald der betreffende Behälterteil um einen vorgegebenen Mindestwinkel relativ zum anderen Behälterteil zugeschwenkt worden ist. Vorteilhaft daran ist, dass diese Haltewirkung des Halteschwerts automatisch entsteht, ohne dass ein zusätzliches Element wie beispielsweise ein Riegel am Niederhalter aktiv geschlossen werden muss. Vorteilhaft ist auch, dass die vom Scharnier hervorstehenden Halteschwerter ein Aufschwenken der Niederhalter in der geöffneten Stellung des Behälters überhaupt nicht behindern.

Als weiteres optionales Merkmal sieht die Erfindung vor, dass Längsstäbe vorgesehen sind, die sich jeweils durch Gelenkstellen zwischen einer ersten Gruppe von mehreren Kettengliedern und einer benachbarten zweiten Gruppe von mehreren Kettengliedern erstrecken. Diese Längsstäbe definieren die Lage des Gelenks zwischen den beiden Gruppen von Kettengliedern und erhöhen die Stabilität der Außenwand des Behälters.

Denkbar ist es ferner, dass mindestens ein Behälterteil einen Rahmen aufweist, der zwei den Behälterteil abschließende Stirnplatten und wenigstens ein die Stirnplatten verbindendes Rahmenteil umfasst. Zusätzliche Verbindungen zwischen den beiden Stirnplatten können durch Längsstäbe entstehen, wenn diese vorhanden sind. Der Rahmen hat den Vorteil, die Stabilität der Form des Behälters noch einmal deutlich zu erhöhen. Je nach Form der Behälterteile könnten die Stirnplatten jeweils etwa halbkreisförmig ausgebildet sein.

Eine weitere Erhöhung der Stabilität des Behälters kann dadurch erreicht werden, dass mindestens ein Behälterteil einen oder mehrere Stützbügel aufweist. Diese können z.B. in äquidistanten Abständen zwischen den beiden Stirnplatten angeordnet sein.

Wenn Längsstäbe vorhanden sind, ist es vorteilhaft, wenn jedes der Enden wenigstens einiger Längsstäbe an einer der Stirnplatten oder an einem Stützbügel angebracht ist. In einer anderen Variante erstrecken sich die Längsstäbe durch Bohrungen in den Stützbügeln hindurch, sodass jedes der beiden Enden der Längsstäbe an jeweils einer der beiden Stirnplatten angebracht ist. Diese Anbringung kann dadurch erfolgen, dass die Längsstäbe in Sackbohrungen in den Stirnplatten eingesetzt sind. Günstiger ist es jedoch, wenn sich die Längsstäbe durch Bohrungen in den Stirnplatten hindurch erstrecken und auf der Außenseite der Stirnplatten einen verbreiterten Kopf aufweisen, der die Längsstäbe an einem Hindurchrutschen durch die Bohrungen in den Stirnplatten hindert. Zu diesem Zweck könnte das äußerste Ende des Längsstabs beispielsweise durch Einwirkung von Kraft und/oder Wärme entsprechend deformiert werden, um den Kopf zu bilden.

Vorzugsweise ist in einer Stirnplatte ein Langloch vorgesehen, das mehrere unterschiedliche Funktionen und Vorteile bietet. Dieses Langloch kann dazu verwendet werden, den Behälter manuell oder durch ein Greifersystem zu ergreifen und zu transportieren oder umzusetzen. Um ein manuelles Ergreifen zu begünstigen, sollte das Langloch vorzugsweise so bemessen sein, dass ein Bediener mit einer normal großen Hand bequem hinein greifen kann. Dafür würde sich ein Langloch mit einer Länge von ca. 9 bis 12 cm und einer Höhe von ca. 2 bis 3 cm eignen. Die Langlöcher haben zudem den Zweck, dass durch die Langlöcher am Ende einer Hochdruckbehandlung das Druckmedium (üblicherweise Wasser) schnell wieder aus dem Behälter abfließen kann, bevor der Behälter aus der Hochdruckkammer befördert wird. Außerdem könnten die Langlöcher zum lagerichtigen Zentrieren der Behälter beispielsweise auf einer Verschließstation oder zur Unterstützung des Öffnens und Schließens der Behälterteile genutzt werden.

Des Weiteren kann es vorteilhaft sein, wenn der Behälter einen Verriegelungsmechanismus zum lösbaren Verriegeln mehrerer Behälterteile in einer geschlossenen Stellung des Behälters umfasst. Dies stellt sicher, dass der Behälter sich nicht ungewollt wieder öffnen und Produkte verlieren kann, wenn er in seine geschlossene Stellung gebracht ist. Dadurch wird der Transport der Produkte mit dem Behälter erleichtert.

In einer besonders einfachen Ausführungsvariante umfasst der Verriegelungsmechanismus eine Steckverbindung zwischen den beiden Behälterteilen, beispielsweise eine Nut-Feder-Verbindung. Zusätzlich oder alternativ könnte aber auch ein lösbarer Riegel vorgesehen sein.

Als Material für die Kettenglieder, die Stirnplatten, die Rahmenteile, die Längsstäbe, die Stützbügel und/oder Komponenten des Verriegelungsmechanismus hat sich Kunststoff als besonders günstig erwiesen. Der Kunststoff sollte hinsichtlich seiner Stabilitäts- und Elastizitätseigenschaften in der Lage sein, den extrem hohen Drücken bei der Hochdruckbehandlung von bis zu 6000 bar standzuhalten. Wenn es sich bei den für die Hochdruckbehandlung vorgesehenen Produkten um Lebensmittel handelt, wäre es zudem vorteilhaft, wenn der Kunststoff für den Kontakt mit Lebensmitteln zugelassen ist. Allerdings ist diese Voraussetzung nicht zwingend, da die Produkte in der Regel bereits verpackt sind, bevor sie hochdruckbehandelt werden. Als Material, das allen diesen Anforderungen gerecht wird, hat sich Azetal-Thermoplast (PA) erwiesen.

Besonders vorteilhaft ist es im Übrigen, wenn sämtliche Kunststoffteile des Behälters, möglicherweise sogar alle Komponenten des Behälters, aus demselben Kunststoff gebildet sind. Denn dies stellt sicher, dass alle betreffenden Komponenten gleichermaßen dazu geeignet sind, den extrem hohen Drücken standzuhalten, sodass nicht an Komponenten mit einem schwächeren Material zuerst ein Ermüdungsbruch auftreten kann.

Im Folgenden wird ein vorteilhaftes Ausführungsbeispiel der Erfindung anhand einer Zeichnung näher erläutert. Im Einzelnen zeigen:
- Figur 1: eine perspektivische Ansicht eines erfindungsgemäßen Behälters in einer geöffneten Stellung,
- Figur 2: eine perspektivische Ansicht des Behälters nach dem Schließen eines ersten Niederhalters,
- Figur 3: eine perspektivische Ansicht des Behälters nach dem Schließen des zweiten Niederhaltens,
- Figur 4: eine perspektivische Ansicht des Behälters in einer geschlossenen Stellung und
- Figur 5: eine perspektivische Ansicht eines Ausschnitts aus dem für die Außenwand des erfindungsgemäßen Behälters verwendeten mehrdimensionalen Kettengliedfeldes.

Gleiche Komponenten sind in den Figuren durchgängig mit gleichen Bezugszeichen versehen.

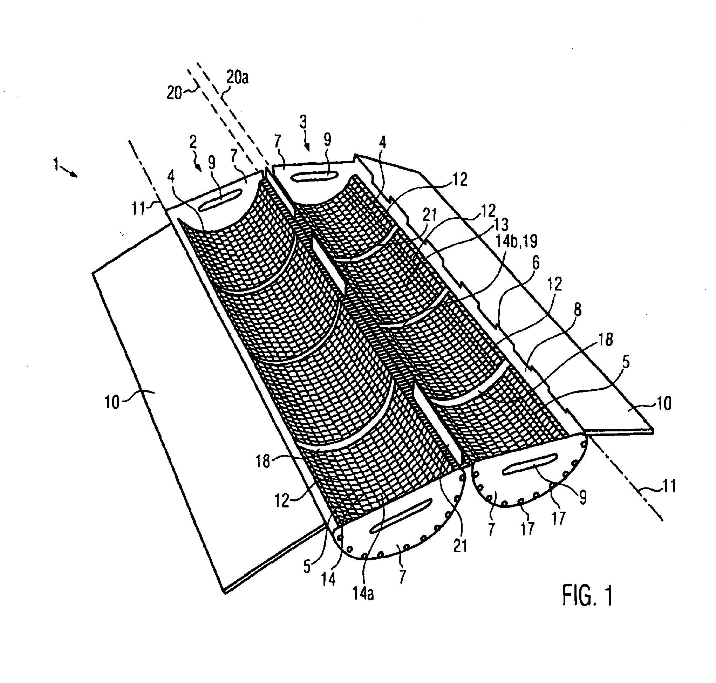

Figur 1 zeigt in perspektivischer Ansicht ein Ausführungsbeispiel eines erfindungsgemä-βen Behälters 1. Der Behälter 1 weist einen ersten Behälterteil 2 und einen zweiten Behälterteil 3 auf, die jeweils eine halbzylindrische Form haben und auch als BehälterUnterteil 2 bzw. Behälter-Oberteil 3 bezeichnet werden können. Jeder der beiden Behälterteile 2, 3 verfügt über einen halbzylinderförmigen Hohlraum 4, der zur Aufnahme von Produkten während einer Hochdruckbehandlung dieser Produkte vorgesehen ist, und der von einer halbzylinderförmigen Außenwand 5 begrenzt wird.

Jeder der beiden symmetrisch zueinander aufgebauten Behälterteile 2, 3 verfügt über einen dem Behälterteil 2, 3 Stabilität verleihenden Rahmen 6. Dieser Rahmen 6 ist in Draufsicht auf den geöffneten Behälterteil 2, 3 etwa C-förmig. Er umfasst an jedem der beiden axialen Enden des jeweiligen Behälterteils 2, 3 eine etwa halbkreisförmige Stirnplatte 7 sowie auf der vom jeweils anderen Behälterteil 2, 3 abgewandten Längsseite ein die beiden Stirnplatten 7 des Behälterteils 2, 3 verbindendes, längliches Rahmenteil 8.

In jeder Stirnplatte 7 ist ein parallel zu der geraden Kante der Stirnpatte 7 ausgerichtetes, ovales oder etwa rechteckförmiges Langloch 9 vorgesehen. Die Abmessungen des Langlochs 9 sind (gerade) groß genug, dass ein Bediener des Behälters 1 bequem mit seiner Hand hindurch greifen kann. Beispielsweise könnte das Langloch 9 eine Länge von 10 cm und eine Höhe von 2,5 cm haben.

An dem Rahmenglied 8 jedes der beiden Behälterteile 2, 3 ist ein plattenförmiger, rechteckförmiger Niederhalter 10 um eine Schwenkachse 11 schwenkbar. In Figur 1 ist jeder der Behälterteile 2, 3 in seiner geöffneten Stellung gezeigt, in der der Niederhalter 10 nach außen verschwenkt ist. Der Niederhalter 10 kann jedoch um die Schwenkachse 11 nach innen verschwenkt werden, um den mit Produkten gefüllten Hohlraum 4 des Behälterteils 2, 3 nach oben abzuschließen und ein ungewolltes Herausfallen der Produkte aus dem Hohlraum 4 zu verhindern. Die Schwenkachse 11 ist parallel zu einer Längs- oder Axialrichtung der Behälterteile 2, 3 bzw. des gesamten Behälters 1 ausgerichtet.

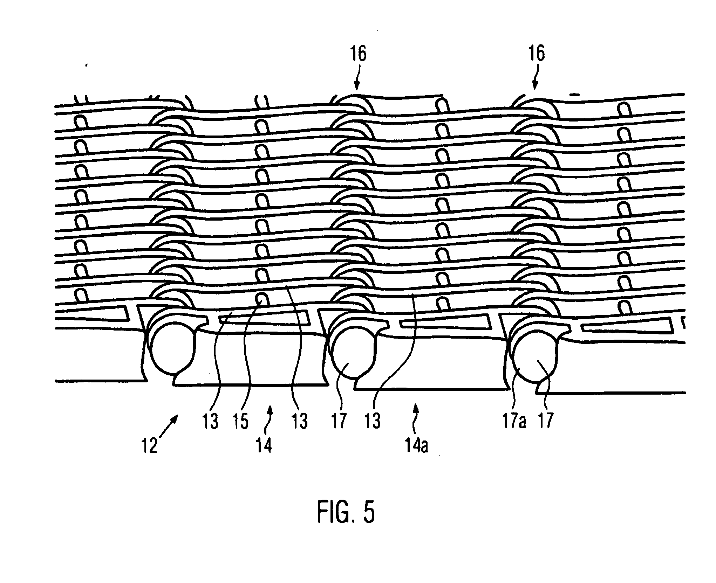

Erfindungsgemäß ist ferner vorgesehen, dass der überwiegende Teil der Außenwand 5 des Behälters 1 durch ein mehrdimensionales, im vorliegenden Ausführungsbeispiel gekrümmtes, zweidimensionales Kettengliedfeld gebildet ist, das seinerseits eine Vielzahl von miteinander gekoppelten Kettengliedern 13 umfasst. Der Aufbau des Kettengliedfeldes 12 wird aus Figur 5 besonders deutlich, die einen Ausschnitt des Kettengliedfeldes 12 in einer gestreckten bzw. ebenen Anordnung der Kettenglieder 13 zeigt. Das Kettengliedfeld 12 umfasst Kettengliedgruppen 14, 14a, die jeweils eine Vielzahl von in Längsrichtung des Behälters 1 hintereinander liegenden und durch einen Steg 15 vergleichsweise starr miteinander verbundenen Kettengliedern 13 aufweist. Jedes Kettenglied 13 erstreckt sich dabei in Querrichtung des Behälters 1 zwischen einer ersten und einer zweiten Gelenkstelle 16, die jeweils durch Bohrungen in den Endabschnitten der Kettenglieder 13 gebildet sind.

An den Gelenkstellen 16 durchsetzt ein Längsstab 17 abwechselnd die Bohrungen der Kettenglieder 13 eines ersten Kettengliedfeldes 14 und eines benachbarten, zweiten Kettengliedfeldes 14a. Um diese Gelenkstelle 16 bzw. um den Längsstab 17 sind die beiden benachbarten Kettengliedfelder 14, 14a daher relativ zueinander verschwenkbar. Durch dieses Verschwenken kann das Kettengliedfeld 12 von der gestreckten bzw. ebenen Form in Figur 5 in die in Figur 1 gezeigte, halbkreisförmig gekrümmte Form gebracht werden. Jeder der Längsstäbe 17 verfügt im Übrigen an jedem seiner beiden Enden über einen verbreiterten Kopf 17a, der ein Herabrutschen der Kettenglieder 13 vom Längsstab 17 verhindert. Solche Kettengliedfelder sind von der Firma Intralox erhältlich und werden auch als Intralox-Bänder bezeichnet. Sie finden Einsatz bisher primär als endlose Förderbänder.

Zurück zu Figur 1: Dort ist zu erkennen, dass die Außenwand 5 des Behälters 1 vier in Längsrichtung des Behälters 1 hintereinander angeordnete Kettengliedfelder 12 aufweist. Jedes der Kettengliedfelder 12 erstreckt sich über beide Behälterteile 2, 3, nämlich von dem Rahmenteil 8 des ersten Behälterteils 2 bis zum Rahmenteil 8 des zweiten Behälterteils 3. Dabei umfasst jedes Kettengliedfeld 12 eine Vielzahl von Kettengliedgruppen 14, 14a, die an Gelenkstellen 16 über Längsstäbe 17 miteinander verbunden sind. Die Längsstäbe 17 erstrecken sich in der Axial- oder Längsrichtung des Behälters 1, während benachbarte Kettengliedgruppen 14, 14a in Querrichtung bzw. Umfangsrichtung des Behälters 1 nebeneinander liegen. Jede Kettengliedgruppe 14, 14a umfasst ihrerseits eine Vielzahl von Kettengliedern 13, die ihrerseits in ihrer Querrichtung bzw. Umfangsrichtung des Behälters 1 ausgerichtet sind.

In äquidistanten Abständen befinden sich zwischen den Stirnplatten 7 jedes Behälterteils 2, 3 halbkreisförmige Stützbügel 18. Während die äußeren Enden jedes Stützbügels 18 mit dem Rahmenteil 8 verbunden sind oder einstückig mit dem Rahmenteil 8 ausgebildet sind, tritt ein Längsstab 17 durch die gegenüberliegenden, inneren Enden der Stützbügel 18 eines Behälterteils 2, 3 hindurch. Auch die übrigen Längsstäbe 17 erstrecken sich durch die Stirnplatten 7, durch die Gelenkstellen 16 zwischen einander benachbarten Kettengliedgruppen 14, 14a, durch die Stützbügel 18 und schließlich durch eine Öffnung oder Bohrung in der gegenüberliegenden Stirnplatte 7 hindurch. Die äußeren Enden der Längsstäbe 17 sind zu verbreiterten Köpfen 17a geformt oder deformiert, sodass die Längsstäbe 17 nicht nach innen aus den Stirnplatten 7 herausrutschen können.

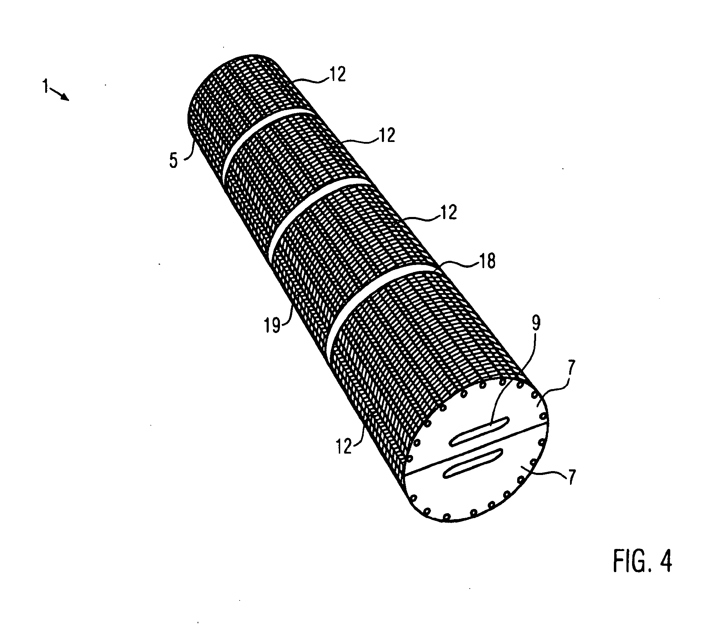

Zwischen den beiden Behälterteilen 2, 3 ist ein Scharnier oder Scharnierbereich 19 gebildet. Dieses Scharnier 19 erlaubt es, die beiden Behälterteile 2, 3 von der geöffneten Stellung (Figur 1) in eine geschlossene Stellung (Figur 4) zu verschwenken, um den Behälter 1 schließen. Gebildet wird das Scharnier 19 durch die vier in Längsrichtung des Behälters 1 hintereinander angeordneten, jeweils mittleren Kettengliedgruppen 14b aller vier Kettengliedfelder 12. Die Gelenkstellen 16 dieser mittleren Kettengliedgruppen 14b befinden sich jeweils auf dem Längsstab 17, der die äußeren Enden der Stützbügel 18 des jeweiligen Behälterteils 2, 3 durchsetzt. Dies ermöglicht es, dass die mittleren Kettengliedgruppen 14b nicht mehr an die vorgegebene Halbzylinderform des jeweiligen Behälterteils 2, 3 gebunden sind, sondern relativ zu dieser Halbzylinderform verschwenken können. Auf diese Weise bildet das Scharnier 19 zwei Scharnierachsen 20, 20a aus, die sich jeweils durch die gegenüberliegenden Gelenkstellen 16 der mittleren Kettengliedgruppen 14b erstrecken. Diese Scharnierachsen 20, 20a liegen parallel zur Axial- oder Längsrichtung des Behälters 1.

Auf mindestens einer, vorzugsweise mehreren (im vorliegenden Ausführungsbeispiel auf dreien) oder sogar auf allen den Scharnierbereich 19 bildenden Kettengliedergruppen 14b befinden sich senkrecht von der Kettengliedgruppe 14b nach oben abstehende Halteschwerter 21. Die Funktion dieses Halteschwerts 21 wird weiter unten erläutert werden.

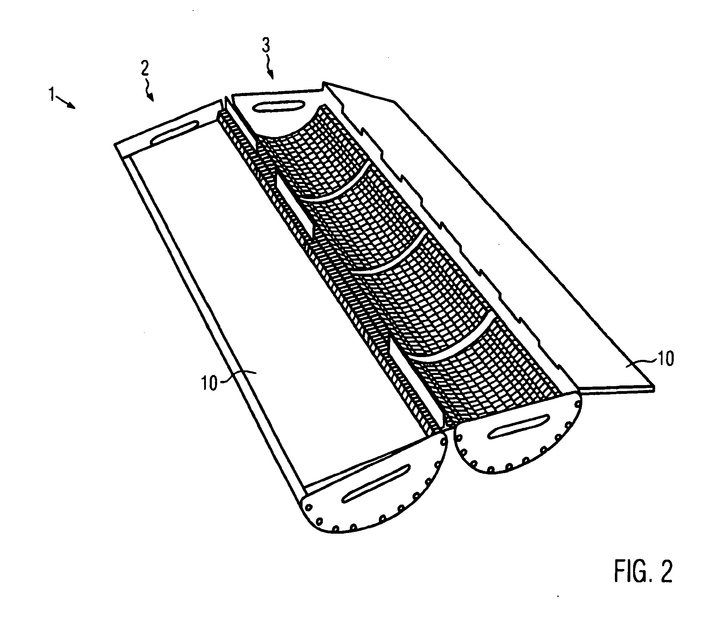

Figur 2 zeigt den Behälter 1 in einer weiterhin geöffneten Stellung. Zur Verdeutlichung der Funktion des Niederhalters 10 ist nun jedoch der Niederhalter 10 des ersten Behälterteils 2 nach innen geschwenkt worden, um so den Hohlraum 4 des ersten Behälterteils 2 abzudecken.

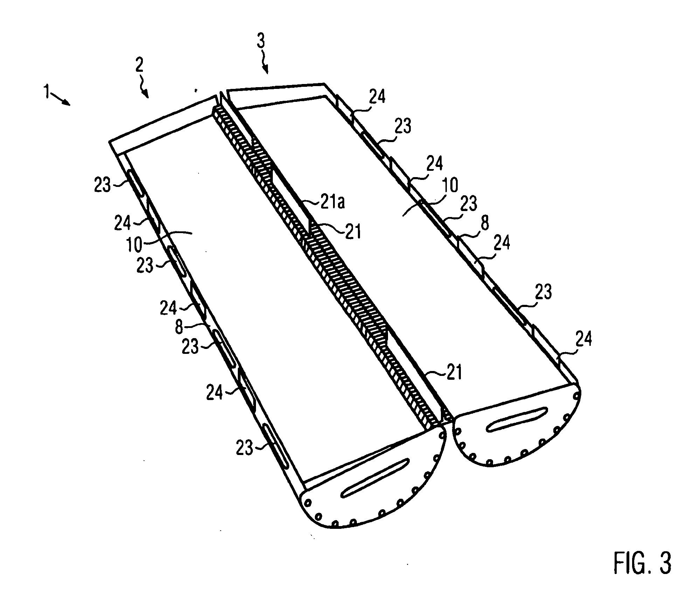

Figur 3 zeigt den Behälter 1 in einer Stellung, in der nun auch der Niederhalter 10 des anderen, zweiten Behälterteils 3 nach innen verschwenkt wurde, um auch den Hohlraum 4 dieses zweiten Behälterteils 3 nach oben abzuschließen. Die Niederhalter 10 wurden dabei jeweils um ihre Schwenkachsen 11 nach innen verschwenkt.

Anhand von Figur 3 kann nun die Funktion der drei Halteschwerter 21 verstanden werden. Wenn nämlich ausgehend von der in Figur 3 gezeigten, immer noch geöffneten Stellung des Behälters 1 die beiden Behälterteile 2, 3 aufeinander zugeschwenkt werden, führt dies dazu, dass ab einem gewissen Schwenkwinkel um die Scharnierachse 20, 20a (beispielsweise bei einem Winkel im Bereich von 10° bis 20°) der Abstand zwischen der Schwenkachse 11 des Niederhalters 10 und der Oberkante 21a des Halteschwerts 21 kleiner wird als die Breite des betreffenden Niederhalters, d.h. der Abstand zwischen der Schwenkachse 11 des Niederhalters 10 und seiner zum Scharnier 19 weisenden Längskante. Ab diesem Schwenkwinkel kann der Niederhalter 10 nicht mehr am Halteschwert 21 vorbei aufschwenken. Automatisch und ohne das Erfordernis, ein weiteres Verriegelungselement zu bedienen, ist damit der Niederhalter 10 in seiner dem Behälterteil 2, 3 abschließenden Stellung gesichert. Ebenso automatisch wird der Niederhalter 10 beim Öffnen des Behälters 1 wieder freigegeben, sobald der Behälterteil 2, 3 weit genug gegenüber dem Scharnierbereich 19 aufgeschwenkt wurde. Die Halteschwerter 21 stellen damit eine sehr einfache und dennoch automatisch wirksame Möglichkeit zum lösbaren Verriegeln der Niederhalter 10 dar.

Ein zusätzlicher Verriegelungsmechanismus 22 dient dazu, die beiden Behälterteile 2, 3 in einer geschlossenen Stellung des Behälters 1 (siehe Figur 4) lösbar miteinander zu verriegeln. Zu dieser geschlossenen Stellung gemäß Figur 4 wird der Behälter 1 gebracht, indem die beiden Behälterteile 2, 3 um den Scharnierbereich 19 herum zueinander geschwenkt werden. Der Verriegelungsmechanismus 22 ist im dargestellten Ausführungsbeispiel in Form einer Steckverbindung zwischen den beiden Behälterteilen 2, 3 ausgebildet. Zu diesem Zweck verfügt jeder Behälterteil 2, 3 auf der Oberseite seines Rahmenteils 8 über eine abwechselnde Anordnung von Nuten 23 und Federn bzw. Vorsprüngen 24. Das Rahmenteil 8 des jeweils anderen Behälterteils 2, 3 verfügt über komplementäre Anordnung von Nuten 23 und Federn 24. Sobald die beiden Rahmenteile 8 in Kontakt miteinander geraten, gelangen die Nuten 23 des einen Behälterteils 2 in Eingriff mit den Federn 24 des anderen Behälterteils 3, und umgekehrt. Auf diese Weise werden die beiden Behälterteile 2, 3 lösbar aneinander gesichert. Komplementäre Nuten 23 und Federn 24 können auch auf den miteinander in Anlage geratenden Oberkanten der Stirnplatte 7 vorgesehen sein.

In dem dargestellten Ausführungsbeispiel des Behälters 1 bestehen sämtliche Teile des Behälters 1 aus dem selben Kunststoff, vorzugsweise einem äußerst stabilen und auch für den Einsatz mit Lebensmitteln zugelassenen Azetal-Thermoplast (PA).

Ausgehend von dem dargestellten Ausführungsbeispiel kann der erfindungsgemäße Behälter 1 in vielfacher Weise geändert werden. Bereits angedeutet wurde, dass der Behälter 1 z.B. auch nur an einem der beiden Behälterteile 2, 3 einen Niederhalter 10 aufweisen kann, oder gar keinen Niederhalter 10. Zudem könnte ein anderer Mechanismus zum Halten eines Niederhalters 10 in seiner geschlossenen Stellung vorgesehen sein, der mehr oder auch weniger Halteschwerter 21 oder andere Elemente wie Riegel oder Bolzen umfasst. Auch der Verriegelungsmechanismus 22 für den gesamten Behälter 1 kann entfallen oder anders gestaltet werden, beispielsweise ebenfalls in Form eines oder mehrerer Riegel oder Bolzen.

## Patentansprüche

1. Behälter (1) zur Aufnahme von Produkten während einer Hochdruckbehandlung der Produkte, wobei der Behälter (1) eine Außenwand (5) und einen innerhalb der Auβenwand (5) gelegenen Hohlraum (4) zur Aufnahme der Produkte aufweist, **dadurch gekennzeichnet, dass** wenigstens ein Abschnitt der Außenwand (5) durch eine Vielzahl von miteinander gekoppelten Kettengliedern (13) gebildet ist, die in Form mindestens eines mehrdimensionalen Kettengliedfeldes (12) angeordnet sind.

2. Behälter nach Anspruch 1, **dadurch gekennzeichnet, dass** der Behälter (1) einen ersten Behälterteil (2) und einen zweiten Behälterteil (3) aufweist, die um ein Scharnier (19) relativ zueinander auf- und zuschwenkbar sind.

3. Behälter nach Anspruch 2, **dadurch gekennzeichnet, dass** an wenigsten einem der Behälterteile (2, 3) ein Niederhalter (10) vorgesehen ist.

4. Behälter nach einem der Ansprüche 2 oder 3, **dadurch gekennzeichnet, dass** sich die Kettenglieder (13) quer zu der Richtung einer vom Scharnier (19) definierten Scharnier- oder Schwenkachse (20, 20a) erstrecken.

5. Behälter nach einem der Ansprüche 2 bis 4, **dadurch gekennzeichnet, dass** sich ein Kettengliedfeld (12) von einem Behälterteil (2, 3) bis zum anderen Behälterteil (2, 3) erstreckt.

6. Behälter nach einem der vorangehenden Ansprüche 2 bis 5, **dadurch gekennzeichnet, dass** das Scharnier (19) durch ein oder mehrere Kettenglieder (13) oder Kettengliedergruppen (14b) gebildet ist.

7. Behälter nach Anspruch 6, **dadurch gekennzeichnet, dass** auf mindestens einigen der das Scharnier (19) bildenden Kettengliedern (13) ein Halteschwert (21) vorgesehen ist.

8. Behälter nach einem der vorangehenden Ansprüche, **dadurch gekennzeichnet, dass** Längsstäbe (17) vorgesehen sind, die sich jeweils durch Gelenkstellen (16) zwischen einer ersten Gruppe (14) von mehreren Kettengliedern (13) und einer benachbarten zweiten Gruppe von mehreren Kettengliedern (13) erstrecken.

9. Behälter nach einem der vorangehenden Ansprüche, **dadurch gekennzeichnet, dass** mindestens ein Behälterteil (2, 3) einen Rahmen (6) aufweist, der zwei den Behälterteil (2, 3) abschließende Stirnplatten (7) und wenigstens ein die Stirnplatten (7) verbindendes Rahmenteil (8) umfasst.

10. Behälter nach einem der vorangehenden Ansprüche, **dadurch gekennzeichnet, dass** mindestens ein Behälterteil (2, 3) einen oder mehrere Stützbügel (18) aufweist.

11. Behälter nach wenigstens den Ansprüchen 8, 9 und 10, **dadurch gekennzeichnet, dass** jedes der Enden wenigstens einiger Längsstäbe (17) an einer der Stirnplatten (7) oder an einem Stützbügel (18) angebracht ist.

12. Behälter nach wenigstens einem der Ansprüche 9 oder 11, **dadurch gekennzeichnet, dass** in einer Stirnplatte (7) ein Langloch (9) vorgesehen ist.

13. Behälter nach einem der vorangehenden Ansprüche, **dadurch gekennzeichnet, dass** der Behälter (1) einen Verriegelungsmechanismus (22) zum lösbaren Verriegeln mehrerer Behälterteile (2, 3) in einer geschlossenen Stellung des Behälters (1) umfasst.

14. Behälter nach Anspruch 13, **dadurch gekennzeichnet, dass** der Verriegelungsmechanismus (22) eine Steckverbindung und/oder einen Riegel aufweist.

15. Behälter nach einem der vorangehenden Ansprüche, **dadurch gekennzeichnet, dass** die Kettenglieder (13), die Stirnplatten (7), die Rahmenteile (8), die Längsstäbe (17), die Stützbügel (18) und/oder Komponenten des Verriegelungsmechanismus (22) aus einem Kunststoff gebildet sind, vorzugsweise aus demselben Kunststoff, beispielsweise aus Azetal-Thermoplast.

## Claims

1. Container (1) for the accommodation of products during a high pressure treatment of the products, wherein the container (1) comprises an outer wall (5) and a cavity (4) situated within the outer wall (5) for the accommodation of the products,
**characterised in that** at least one section of the outer wall (5) is formed by a large number of mutually coupled chain links (13), which are arranged in the form of at least one multidimensional chain link matrix (12).

2. Container according to Claim 1, **characterised in that** the container (1) comprises a first container part (2) and a second container part (3), which are relatively pivotable to and away from one another about a hinge (19).

3. Container according to Claim 2, **characterised in that** a retaining clamp (10) is provided on at least one of the container parts (2, 3).

4. Container according to one of the Claims 2 or 3, **characterised in that** the chain links (13) extend transversely to the direction of a hinge axis or pivoting axis (20, 20a) defined by the hinge (19).

5. Container according to one of the Claims 2 to 4, **characterised in that** a chain link matrix (12) extends from one container part (2, 3) to the other container part (2, 3).

6. Container according to one of the previous Claims 2 to 5, **characterised in that** the hinge (19) is formed by one or a plurality of chain links (13) or chain link groups (14b).

7. Container according to Claim 6, **characterised in that** a retaining blade (21) is provided on at least some of the chain links (13) forming the hinge (19).

8. Container according to one of the previous claims, **characterised in that** longitudinal bars (17) are provided which extend in each case through articulated points (16) between a first group (14) of a plurality of chain links (13) and an adjacent second group of a plurality of chain links (13).

9. Container according to one of the previous claims, **characterised in that** at least one container part (2, 3) has a frame (6) comprising two face plates (7) closing the container part (2, 3) and at least one frame part (8) joining the face plates (7).

10. Container according to one of the previous claims, **characterised in that** at least one container part (2, 3) has one or a plurality of supporting yokes (18).

11. Container according to at least Claims 8, 9, 10, **characterised in that** each of the ends of at least some longitudinal bars (17) are fitted to one of the face plates (7) or to a supporting yoke (18).

12. Container according to at least one of the Claims 9 or 11, **characterised in that** an elongated hole (9) is provided in a face plate (7).

13. Container according to one of the previous claims, **characterised in that** the container (1) comprises a locking mechanism (22) for the releasable locking of a plurality of container parts (2, 3) in a closed position of the container (1).

14. Container according to Claim 13, **characterised in that** the locking mechanism (22) has a plug connector and / or a lock.

15. Container according to one of the previous claims, **characterised in that** the chain links (13), face plates (7), frame parts (8), longitudinal bars (17), supporting yokes (18) and / or components of the locking mechanism (22) are formed in a plastic, preferably the same plastic, for example acetal thermoplast.

## Revendications

1. Récipient (1) destiné à recevoir des produits pendant un traitement sous haute pression de ces produits, le récipient (1) présentant une paroi extérieure (5) et une cavité (4) destinée à recevoir les produits et située à l'intérieur de la paroi extérieure (5),
**caractérisé en ce qu'**au moins un secteur de la paroi extérieure (5) est formé par un grand nombre de maillons de chaîne (13) mutuellement couplés les uns aux autres, qui sont agencés sous la forme d'au moins un champ de maillons de chaîne (12) multidimensionnel.

2. Récipient selon la revendication 1, **caractérisé en ce que** le récipient (1) comprend une première partie de récipient (2) et une deuxième partie de récipient (3), qui peuvent pivoter relativement l'une par rapport à l'autre en ouverture et fermeture, autour d'une charnière (19).

3. Récipient selon la revendication 2, **caractérisé en ce que** sur l'une au moins des parties de récipient (2, 3) il est prévu un élément presseur de retenue (10).

4. Récipient selon l'une des revendications 2 ou 3, **caractérisé en ce que** les maillons de chaîne (13) s'étendent transversalement à la direction d'un axe de charnière ou de pivotement (20, 20a) défini par la charnière (19).

5. Récipient selon l'une des revendications 2 à 4, **caractérisé en ce qu'**un champ de maillons de chaîne (12) s'étend d'une partie de récipient (2, 3) jusqu'à l'autre partie de récipient (2, 3).

6. Récipient selon l'une des revendications précédentes 2 à 5, **caractérisé en ce que** la charnière (19) est formée par un ou plusieurs maillons de chaîne (13) ou groupes de maillons de chaîne (14b).

7. Récipient selon la revendication 6, **caractérisé en ce que** sur au moins quelques-uns des maillons de chaîne (13) formant la charnière (19), est prévue une lame de maintien (21).

8. Récipient selon l'une des revendications précédentes, **caractérisé en ce que** sont prévues des broches longitudinales (17), qui s'étendent respectivement à travers des points d'articulation (16) entre un premier groupe (14) de plusieurs maillons de chaîne (13) et un deuxième groupe, voisin, de plusieurs maillons de chaîne (13).

9. Récipient selon l'une des revendications précédentes, **caractérisé en ce qu'**au moins une partie de récipient (2, 3) présente un cadre (6), qui comprend deux plaques frontales (7) fermant la partie de récipient (2, 3), et au moins une partie de cadre (8) reliant les plaques frontales (7).

10. Récipient selon l'une des revendications précédentes, **caractérisé en ce qu'**au moins une partie de récipient (2, 3) comprend un ou plusieurs arceaux de support (18).

11. Récipient selon au moins les revendications 8, 9 et 10, **caractérisé en ce que** chacune des extrémités de quelques-unes au moins des broches longitudinales (17), est fixée à une des plaques frontales (7) ou à un arceau de support (18).

12. Récipient selon l'une au moins des revendications 9 ou 11, **caractérisé en ce que** dans une plaque frontale (7) est prévu un trou oblong ou allongé (9).

13. Récipient selon l'une des revendications précédentes, **caractérisé en ce que** le récipient (1) comporte un mécanisme de verrouillage (22) pour le verrouillage réversible de plusieurs parties de récipient (2, 3) dans une position fermée du récipient (1).

14. Récipient selon la revendication 13, **caractérisé en ce que** le mécanisme de verrouillage (22) comprend une liaison par emmanchement et/ou un verrou.

15. Récipient selon l'une des revendications précédentes, **caractérisé en ce que** les maillons de chaîne (13), les plaques frontales (7), les parties de cadre (8), les broches longitudinales (17), les arceaux de support (18) et/ou des composants du mécanisme de verrouillage (22) sont réalisés en une matière plastique, de préférence en la même matière plastique, par exemple un thermoplastique du type acétal.
